## Europäisches Patentamt

## European Patent Office
## Office européen des brevets

(19)

(11) Veröffentlichungsnummer: **0 024 729**
A2

(12) **EUROPÄISCHE PATENTANMELDUNG**

(21) Anmeldenummer: **80105106.1**

(22) Anmeldetag: **28.08.80**

(51) Int. Cl.³: **F 16 B 2/14**
    F 16 B 3/00
    //G01L7/00, G05D16/14

(30) Priorität: **31.08.79 DE 2935298**

(43) Veröffentlichungstag der Anmeldung:
    **11.03.81 Patentblatt 81/10**

(84) Benannte Vertragsstaaten:
    **AT FR NL**

(71) Anmelder: **SIEMENS AKTIENGESELLSCHAFT Berlin und München**
    **Postfach 22 02 61**
    **D-8000 München 22(DE)**

(72) Erfinder: **Bach, Wolfgang**
    **Dürrenbüchiger Strasse 60**
    **D-7518 Bretten-Dürrenbüchig(DE)**

(72) Erfinder: **Eschenbrenner, Bernhard, Ing. grad.**
    **Bert-Brecht-Strasse 90**
    **D-7500 Karlsruhe 21(DE)**

(72) Erfinder: **Ulrich, Peter**
    **Kriegsstrasse 122**
    **D-7500 Karlsruhe(DE)**

(54) **Vorrichtung zur Befestigung von druckbeaufschlagbaren, pneumatischen Bauelementen in einer Grundplatte.**

(57) Vorrichtung zur Befestigung von druckbeaufschlagten, pneumatischen Bauelementen in einer Grundplatte. Das Bodenstück des Bauelements weist ein in eine Ausnehmung der Grundplatte passendes, zylindrisches Mittelteil auf, in welches eine zur Mittelachse geneigte ebene Fläche eingearbeitet ist und gegen welche ein in der Grundplatte geführter Bolzen mit keilartigem Schaftabschnitt verspannbar ist.

Mit einer derartigen Vorrichtung lassen sich Bauelemente, wie Federbälge, Federrohre, Membrandosen, wie sie in Geräten der pneumatischen Meß-, Regel- und Steuertechnick Verwendung finden, einfach und maßgenau in deren Grundplatte einsetzen.

FIG 2

EP 0 024 729 A2

SIEMENS AKTIENGESELLSCHAFT          Unser Zeichen
Berlin und München                  VPA 79 P 3543

Vorrichtung zur Befestigung von druckbeaufschlagbaren,
pneumatischen Bauelementen in einer Grundplatte

Die Erfindung betrifft eine Vorrichtung zur Befestigung
druckbeaufschlagbarer Bauelemente in nach dem Prinzip
des Momentenvergleichs arbeitenden Geräten der pneumatischen Meß- und Regeltechnik, mit einer Grundplatte
mit Ausnehmungen zur Aufnahme der mit zentrischen Anschlußstutzen versehenen Bodenstücke der Bauelemente.

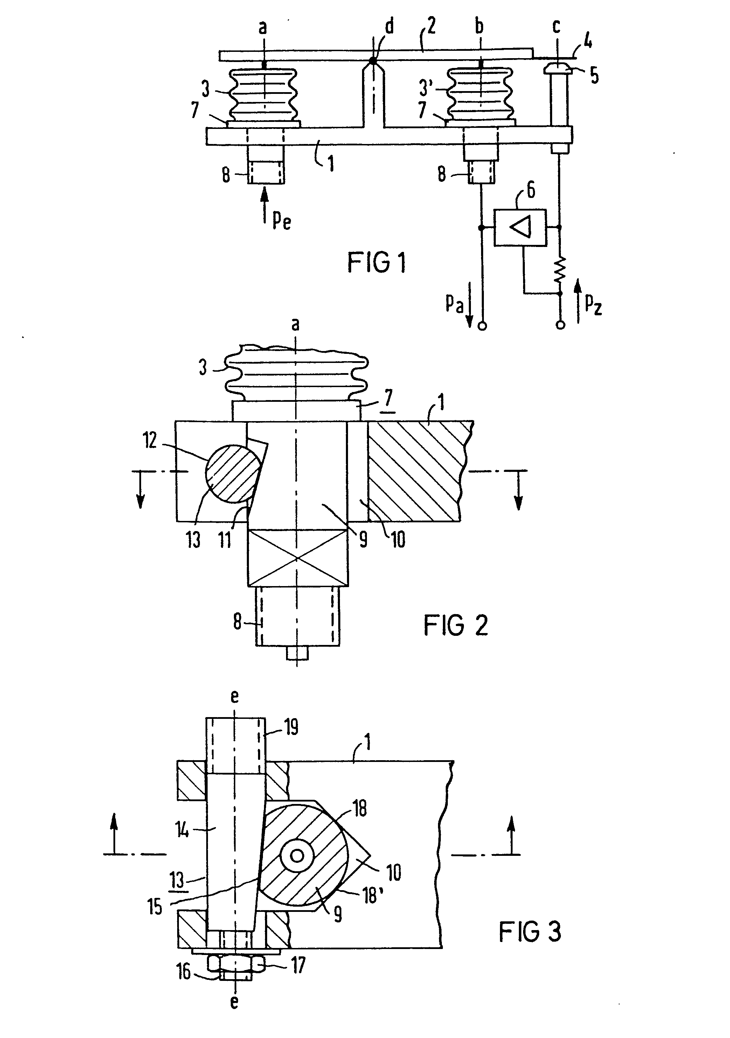

Ein derartiges Gerät, beispielsweise ein Druck-Meßumformer, welcher einen Eingangsdruck $p_e$ in einen proportionalen, normierten Ausgangsdruck $p_a$ umwandelt, ist schematisch in Figur 1 dargestellt.
Das Gerät arbeitet nach dem Prinzip des Momentenvergleichs und hat dazu eine über einer Grundplatte 1 angeordnete Kraftwaage 2, die als ein um die Drehachse d
verschwenkbarer zweiarmiger Hebel ausgebildet ist. An
dem einen Hebelarm der Kraftwaage 2 ist der mit dem Eingangsdruck $p_e$ als Meßgröße beaufschlagte Federbalg 3 als
pneumatisches Bauelement angekoppelt, mit gleicher Wir-

Sp 4 Bz / 29.08.1979

kungsrichtung am anderen Hebelarm ein Kompensationsbalg 3'. Mittels eines von einem Hebelarm der Kraftwaage 2 betätigten Düse-Prallplatte-Systems 4 als veränderlicher Widerstand eines noch den Festwiderstand 5 enthaltenden Druckteilers wird aus dem Zuluftdruck $p_z$ der Steuerdruck für einen Verstärker 6 erzeugt, dessen Ausgangsdruck $p_a$ der Ausgangsdruck des Meßumformers ist und auch als Rückführgröße im Kompensationsbalg 3' wirkt. Die durch die Kraftwirkung der beiden druckbeaufschlagten Bälge 3 und 3' erzeugten, gegeneinander wirkenden Drehmomente heben sich auf. Der Ausgangsdruck $p_a$ ist dann dem Eingangsdruck $p_e$ proportional.

Ein bei der Serienfertigung solcher nach dem Momentenvergleich arbeitender Geräte auftretendes Problem ist die möglichst genaue Einhaltung der geometrischen Verhältnisse, wie hier der Abstände der Mittelachsen a, b, c der druckbeaufschlagbaren Bauelemente 3, 3' und 4 zu der Drehachse d der Kraftwaage 2. Zur maßgerechten Befestigung dieser Bauelemente in der Grundplatte 1 sind die Bälge 3 und 3' und in ähnlicher Weise auch die Düse des Düse-Prallplatte-Systems 4 mit Bodenstücken 7 versehen, die in zentrische Anschlußstutzen 8 für Druckleitungen auslaufen und in Ausnehmungen der Grundplatte 1 befestigt werden. Es müssen dabei aus den angegebenen Gründen enge Toleranzen eingehalten werden.

Es besteht somit die Aufgabe, eine Vorrichtung zur Befestigung von druckbeaufschlagbaren Bauelementen in der Grundplatte von pneumatischen Geräten zu schaffen, die es erlaubt, beim Aufbau der Geräte in der Serienfertigung wie auch beim Auswechseln der Bauelemente im Falle einer Reparatur oder einer Änderung des Meßbereichs die geometrische Anordnung der Bauelemente auf der Grundplatte auch ohne Vorgabe enger Toleranzen genau einzuhalten.

Eine Lösung der Aufgabe wird in einer Vorrichtung der eingangs genannten Art gesehen, die dadurch gekennzeichnet ist, daß das Bodenstück des Bauelements ein zylindrisches, in eine Ausnehmung in der Grundplatte passendes Mittelteil aufweist, in dessen Mantelfläche eine zur Mittelachse geneigte ebene Fläche eingearbeitet ist, und daß in einer tangential zu dem zylindrischen Mittelteil in der Grundplatte verlaufenden Bohrung ein Bolzen mit einem keilartig ausgebildeten Schaftabschnitt gegen die geneigte Fläche des Mittelteils verspannbar ist.

Der Bolzen kann dazu einen sich konisch verjüngenden Schaftabschnitt aufweisen oder auf einem Teil seines Schaftes mit einer gegen seine Mittelachse geneigten ebenen Fläche versehen sein.

Wird der Bolzen mit Hilfe einer Schraube axial in seiner Führung in der Grundplatte bewegt, so legt sich sein im Längsschnitt keilartig ausgebildetes Schaftteil gegen die geneigte Fläche im zylindrischen Mittelteil des Bodenstücks des Bauelements und sichert das Bodenstück in seiner Ausnehmung in der Grundplatte in definierter Lage gegen axiale und radiale Verschiebung sowie gegen Verdrehung.

Die Befestigung ist leicht lösbar, so daß der Austausch von druckbeaufschlagbaren Bauelementen keine Schwierigkeiten bereitet.

Zur Erläuterung der Erfindung ist in den Figuren 2 und 3 ein Ausführungsbeispiel in zwei verschiedenen Schnitten dargestellt und im folgenden beschrieben.

Figur 2: Ein druckbeaufschlagbares, pneumatisches Bauelement, beispielsweise eine Membrandose, ein Federrohr oder wie hier ein Federbalg 3, sitzt mit dem überstehenden Rand seines Bodenstücks 7 auf der oberen Fläche einer Grundplatte 1 auf. Das Bodenstück 7 ragt mit einem zylindrischen Mittelteil 9 in eine Ausnehmung 10 der Grundplatte 1 und setzt sich in einem Anschlußstutzen 8 zur Anbringung der Druckanschlußleitung fort.

In der Mantelfläche des zylindrischen Mittelteils 9 ist eine zur Mittelachse a geneigte und in Richtung auf den Federbalg 3 konvergierende ebene Fläche 11 eingearbeitet.

In einer Querbohrung 12 in der Grundplatte 1 ist ein Bolzen 13 tangential zu dem Mittelteil 9 des Bodenstücks 7 geführt. Der Abstand zwischen der Mittelachse a des zentrischen Bodenstücks 7 und der Mittelachse e des Bolzens 13 ist kleiner als die Summe der Radien der Bohrung 12 und des zylindrischen Mittelteils 9.

Der Bolzen 13 weist einen keilartig ausgebildeten Schaftabschnitt 14 auf, der hier, wie in Figur 3 zu erkennen ist, durch eine gegen seine Mittelachse e geneigte ebene Fläche 15 gebildet wird. An dem in Richtung der Verjüngung des keilartig ausgebildeten Schaftteils des Bolzens 13 liegenden Ende ist dieser mit einem Gewinde 16 versehen, welches seitlich aus der Grundplatte 1 herausragt. Mittels einer auf dieses Gewinde 16 aufgesetzten Schraubenmutter 17, die sich gegen die Grundplatte 1 abstützt, läßt sich der Bolzen 13 axial bewegen, derart, daß sich sein keilartig ausgebildeter Schaftabschnitt 14, hier die schräge Fläche 15, an die geneigte Fläche 11 des Mittelteils 9 des Bodenstücks 7 anlegt und gegen diese verspannt werden kann.

In einer bevorzugten Ausführungsform ist - wie in Figur 3 dargestellt - die Ausnehmung 10 in der Grundplatte 11 nicht kreisrund oder als Langloch ausgebildet, sondern weist mindestens zwei gerade achsparallele Flächen 18, 18' auf, die in einem Winkel zusammenstoßen, dessen Scheitel in einer die Mittelachse a des eingesetzten Mittelteils 9 des Bodenstücks 7 enthaltenden Ebene liegt. Damit wird erreicht, daß das zylindrische Mittelteil 9 an zwei symmetrisch zu dieser Mittelebene liegenden Linien an den Wänden 18 und 18' anliegt und so nach Art einer bekannten Prismenführung eine definierte Lage einnimmt.

Um beim Auswechseln des Bauelements nach Lösen der Schraubenmutter 17 die Trennung der gegeneinander verspannten Teile zu erleichtern, ist das aus der Grundplatte 1 ragende andere Ende des Bolzens 13 ebenfalls mit einem Gewinde 19 versehen, auf welches eine hier nicht gezeigte, sich gegen die Grundplatte 1 abstützende Flügelmutter oder dergleichen zur Lösung der Keilverbindung aufgeschraubt werden kann.

Patentansprüche

1. Vorrichtung zur Befestigung druckbeaufschlagbarer Bauelemente in nach dem Prinzip des Momentenvergleichs arbeitenden Geräten der pneumatischen Meß- und Regeltechnik, mit einer Grundplatte mit Ausnehmungen zur Aufnahme der mit zentrischen Anschlußstutzen versehenen Bodenstücke der Bauelemente, d a d u r c h  g e - k e n n z e i c h n e t , daß das Bodenstück (7) des Bauelements ein zylindrisches, in eine Ausnehmung (10) in der Grundplatte (1) passendes Mittelteil (9) aufweist, in dessen Mantelfläche eine zur Mittelachse (a) geneigte ebene Fläche (11) eingearbeitet ist, und daß in einer tangential zu dem zylindrischen Mittelteil (9) in der Grundplatte (1) verlaufenden Bohrung (12) ein Bolzen (13) mit einem keilartig ausgebildeten Schaftabschnitt (14) gegen die geneigte Fläche (11) des Mittelteils (9) verspannbar ist.

2. Vorrichtung nach Anspruch 1, d a d u r c h  g e - k e n n z e i c h n e t , daß der Bolzen (13) einen sich konisch verjüngenden Schaftabschnitt aufweist.

3. Vorrichtung nach Anspruch 1, d a d u r c h  g e - k e n n z e i c h n e t , daß der Bolzen (13) auf einem Teil seines Schafts mit einer gegen seine Mittelachse (e) geneigten ebenen Fläche (15) versehen ist.

4. Vorrichtung nach Anspruch 1, 2 oder 3, d a d u r c h  g e k e n n z e i c h n e t , daß der Bolzen (13) an einem Ende mit Gewinde (16) versehen und mittels einer an einer Fläche der Grundplatte (1) anliegenden Schraubenmutter (17) gegen das Mittelteil (9) des Bodenstücks (7) verspannbar ist.

5. Vorrichtung nach einem der Ansprüche 1 bis 4, d a - d u r c h   g e k e n n z e i c h n e t , daß der Bolzen (13) an beiden, aus der Bohrung (12) in der Grundplatte (1) ragenden Enden mit Gewinde (16, 19) versehen ist.

6. Vorrichtung nach Anspruch 1, d a d u r c h   g e - k e n n z e i c h n e t , daß die Ausnehmung (10) in der Grundplatte (1) zur Aufnahme des zylindrischen Mittelteils (9) des Bodenstücks (7) zwei in einem Winkel aufeinanderstoßende ebene achsparallele Flächen (18, 18') aufweist.

FIG 1

FIG 2

FIG 3